# EUROPÄISCHE PATENTSCHRIFT

(11) **EP 1 910 149 B1**
(45) Veröffentlichungstag und Bekanntmachung des Hinweises auf die Patenterteilung: **05.10.2011**
(21) Anmeldenummer: 06762440.3
(22) Anmeldetag: 06.07.2006
(51) Int. Cl.: B62D 1/20

(54) **VORRICHTUNG ZUR VERBINDUNG EINER ZWISCHENWELLE MIT EINEM RITZEL EINES LENKGETRIEBES**
DEVICE FOR CONNECTING AN INTERMEDIATE SHAFT TO A PINION OF A STEERING MECHANISM
DISPOSITIF POUR LE RACCORDEMENT D'UN ARBRE INTERMEDIAIRE A UN PIGNON D'UN MECANISME DE DIRECTION

(30) Priorität: 19.07.2005 DE 102005033627
(43) Veröffentlichungstag der Anmeldung: 16.04.2008
(73) Patentinhaber: GM Global Technology Operations LLC, Detroit, MI 48265-3000 (US)
(72) Erfinder: PISKON, Marian, 65187 Wiesbaden (DE); RANKER, Norbert, 65428 Rüsselsheim (DE)
(74) Vertreter: Strauss, Peter
(86) Internationale Anmeldenummer: PCT/EP2006/006583
(87) Internationale Veröffentlichungsnummer: WO 2007/009602

(56) Entgegenhaltungen:
- EP-A- 0 309 344
- EP-A- 0 445 591
- EP-A- 1 087 152
- DE-A1- 19 829 304
- US-A- 6 135 667
- PATENT ABSTRACTS OF JAPAN Bd. 2003, Nr. 12, 5. Dezember 2003 (2003-12-05) -& JP 2004 278698 A (KOYO SEIKO CO LTD; NISSAN MOTOR CO LTD), 7. Oktober 2004 (2004-10-07)
- PATENT ABSTRACTS OF JAPAN Bd. 2000, Nr. 14, 5. März 2001 (2001-03-05) -& JP 2000 309278 A (NSK LTD), 7. November 2000 (2000-11-07)

## Beschreibung

Die Erfindung betrifft ein Klemmstück zur Verbindung einer Zwischenwelle mit einer Ritzelwelle eines Lenkgetriebes eines Kraftfahrzeugs. Solche Klemmstücke werden auch als Kupplungsstücke bezeichnet, mit denen eine Lenksäule mit einem Wellenzapfen eines solchen Lenkgetriebes verbunden wird. Ein Klemmstück ist aus der DE 40 06 787 C1 bekannt.

Das darin gezeigte Klemmstück ist sehr aufwändig herzustellen, obgleich damit gegenüber den vorher bekannten Klemmstücken angeblich Vorteile in der Montage erreicht werden. Wegen des aufwändigen Aufbaus, der wenigstens ein kompliziertes Frästeil und eine Schraubenfeder vorsieht, hat es sich in der Praxis nicht bewährt. Allenfalls bei Lenkgetrieben, die öfter von der Lenksäule eines Kraftfahrzeugs getrennt werden sollen, wie beispielsweise bei Formel-1-Fahrzeugen, lohnt sich ein derartiger Aufwand.

Aus der EP 1 087 152 B1 ist ein Klemmstück bekannt, dessen Klemmbolzen außenseitig Rippen aufweist, die die zu fixierende Welle gegen die Schenkel des Klemmstücks drücken. Gemäß der EP 0 309 344 B1 übernimmt diese Aufgabe ein auf eine Spannschraube aufgeschraubter Ring mit ovalem Querschnitt. Die US 6,135,667 offenbart ein Klemmstück mit einer Spannschraube, wobei die Spannschraube ein Zwischenstück aufweist, das beim Spannen der Schraube seinen Durchmesser vergrößert und auf diese Weise ebenfalls die Welle gegen die Schenkel des Klemmstücks drückt.

Diesen Klemmstücken ist gemeinsam, dass es mit ihnen nicht möglich ist, flexibel auf Bedingungen bei der Montage einzugehen, beispielsweise um Toleranzen der verwendeten Bauteile auszugleichen.

Es ist somit Aufgabe der Erfindung, ein verbessertes Klemmstück, eine Lenkeinrichtung und ein Verfahren zur Montage einer solchen Lenkeinrichtung anzugeben.

Diese Aufgabe wird durch den Gegenstand der unabhängigen Patentansprüche gelöst. Vorteilhafte Weiterbildungen ergeben sich aus den jeweiligen abhängigen Patentansprüchen.

Die Erfindung sieht ein Klemmstück bzw. ein Kupplungsstück zur Verbindung einer Zwischenwelle bzw. einer Lenksäule mit einer Ritzelwelle bzw. mit einem Wellenzapfen eines Lenkgetriebes eines Kraftfahrzeugs vor. Das Klemmstück weist zwei Seitenwangen auf, die so ausgebildet sind, dass dazwischen die Ritzelwelle unter Klemmung der Seitenwangen mit einer Spannschraube aufnehmbar ist. Die Spannschraube weist an einem Ende ein Betätigungselement für ein Betätigungswerkzeug auf. Das Betätigungswerkzeug kann dabei ein Schraubenschlüssel sein, wobei dann das Betätigungselement als Schraubenkopf oder ähnlich ausgebildet wird.

An dem Betätigungselement gegenüber liegenden Ende weist die Spannschraube einen Gewindeabschnitt auf, der in einen entsprechenden Gewindeabschnitt an einer der beiden Seitenwangen in dem Klemmstück eingreift.

Das Andrückelement ist als Zangenfederelement ausgebildet, das einen zentralen Ringabsatz der Spannschraube umschließt. Der zentrale Ringabsatz ist dabei zwischen dem Schraubenkopf und dem Gewindeabschnitt der Spannschraube vorgesehen.

Mit einem damit ausgerüstetem Klemmstück lässt sich durch geeignete Wahl der Abmessungen von Ringabsatz und Zangenfederelement besonders gut auf Randbedingungen bei der Montage reagieren. So kann beispielsweise durch Zusammendrücken des Zangenfederelements mit einer einfachen Zange eine höhere Reibungskraft beim Drehen auf dem Ringabsatz hergestellt werden, wenn dies benötigt wird. Hierfür hat es sich bewährt, beim Zangenfederelement an seinem Umfang einen Federschlitz offen zu lassen, wobei die Breite des Federschlitzes die Vorspannkraft beeinflusst.

Gemäß einem Grundgedanken der Erfindung wird die Spannschraube mit einem Andrückelement versehen, das einen vorstehenden Andrückabschnitt aufweist. Das Andrückelement ist gegen eine Reibungskraft bewegbar auf der Spannschraube gelagert.

Mit einem solchen Klemmstück können einfache und dauerhafte Verbindungen zwischen Zwischenwelle und Ritzelwelle hergestellt werden. Dabei stellt das Andrückelement sicher, dass die jeweils beaufschlagte Welle, also die Zwischenwelle oder die Ritzelwelle, fest in den Bereich zwischen die beiden Seitenwangen des Klemmstücks gedrückt wird, wobei dies ohne weiteres Zutun beim Anziehen der Spannschraube erfolgt. Beim Anziehen der Spannschraube dreht nämlich das Andrückelement mit der Spannschraube mit, bis es die entsprechende Welle an ihrer Außenseite berührt. Wenn ausgehend von diesem Zustand die Spannschraube weitergedreht wird, dann erfolgt dies gegen eine Reibungskraft, die zwischen dem Andrückelement und der Spannschraube erzeugt wird. Diese Reibungskraft wirkt sich als Druckkraft auf die beanspruchte Welle aus. Dadurch wird die gewünschte Beaufschlagung der betreffenden Welle bewirkt.

In einer besonders vorteilhaften Ausgestaltung ist das Andrückelement verdrehbar auf einem Ringabsatz der Spannschraube gelagert. Es ist auch denkbar, das Andrückelement verschieblich auf der Spannschraube zu lagern. Die verdrehbare Lagerung begünstigt besonders eine einfache Betätigung des Andrückelements, wenn die Spannschraube angezogen wird.

Dabei kann es besonders von Vorteil sein, das Andrückelement als Zangenfederelement auszubilden, das einen zentralen Ringabsatz der Spannschraube umschließt. Der zentrale Ringabsatz ist dabei zwischen dem Schraubenkopf und dem Gewindeabschnitt der Spannschraube vorgesehen. Mit einem damit ausgerüstetem Klemmstück lässt sich durch geeignete Wahl der Abmessungen von Ringabsatz und Zangenfederelement besonders gut auf Randbedingungen bei der Montage reagieren. So kann beispielsweise durch Zusammendrücken des Zangenfederelements mit einer einfachen Zange eine höhere Reibungskraft beim Drehen auf dem Ringabsatz hergestellt werden, wenn dies benötigt wird. Hierfür hat es sich bewährt, beim Zangenfederelement an seinem Umfang einen Federschlitz offen zu lassen, wobei die Breite des Federschlitzes die Vorspannkraft beeinflusst.

Die Erfindung umfasst auch ein Lenkgetriebe mit einem erfindungsgemäßen Klemmstück sowie ein Kraftfahrzeug mit einem solchen erfindungsgemäßen Lenkgetriebe.

Die Erfindung ist in der Zeichnung anhand eines Ausführungsbeispiels näher veranschaulicht.
- Figur 1: zeigt eine perspektivische Ansicht eines erfindungsgemäßen Klemmstücks mit einer eingelegten Ritzelwelle,
- Figur 2: zeigt eine Spannschraube für das Klemmstück aus Figur 1 in teilweise geschnittenem Zustand,
- Figur 3: zeigt einen Querschnitt durch das Klemmstück aus Figur 1 mit einer eingesetzten Spannschraube gemäß Figur 2 und
- Figur 4: zeigt einen weiteren Querschnitt durch das Klemmstück aus Figur 3, wobei einige Einzelheiten der besseren Übersicht halber weggelassen sind.

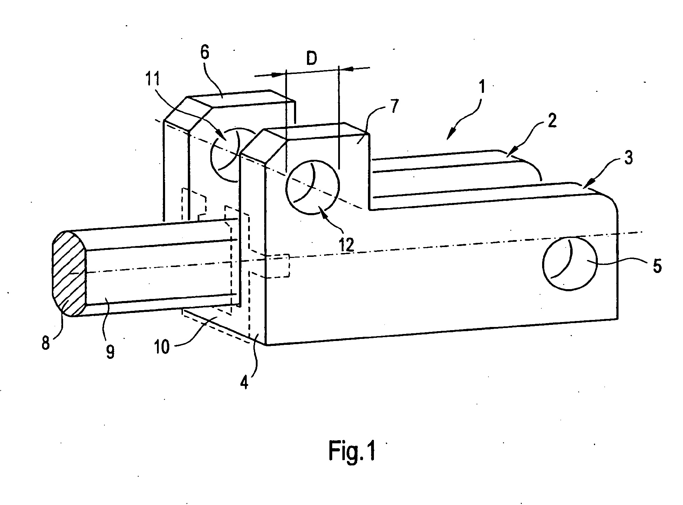

Figur 1 zeigt eine perspektivische Ansicht eines Klemmstücks 1. Das Klemmstück 1 gliedert sich in eine linke Seitenwange 2, in eine rechte Seitenwange 3 und in eine diese verbindende Bodenplatte 4. In der linken Seitenwange 2 und in der rechten Seitenwange 3 ist je eine Zwischenwellenbolzenöffnung 5 vorgesehen, von der in dieser Ansicht nur diejenige in der rechten Seitenwange 3 zu sehen ist. Durch einen in dieser Ansicht nicht gezeigten Zwischenwellenbolzen wird eine ebenfalls nicht gezeigte Zwischenwelle mit dem Klemmstück 1 verbunden, indem dieser sowohl in die beiden Zwischenwellenbolzenöffnungen 5 als auch in eine in der Zwischenwelle vorgesehene Öffnung eingeschoben wird. Von der linken Seitenwange 2 erstreckt sich ein linkes Klemmschraubenohr 6 nach oben hin. Ebenso erstreckt sich von der rechten Seitenwange ein rechtes Klemmschraubenohr 7 nach oben hin.

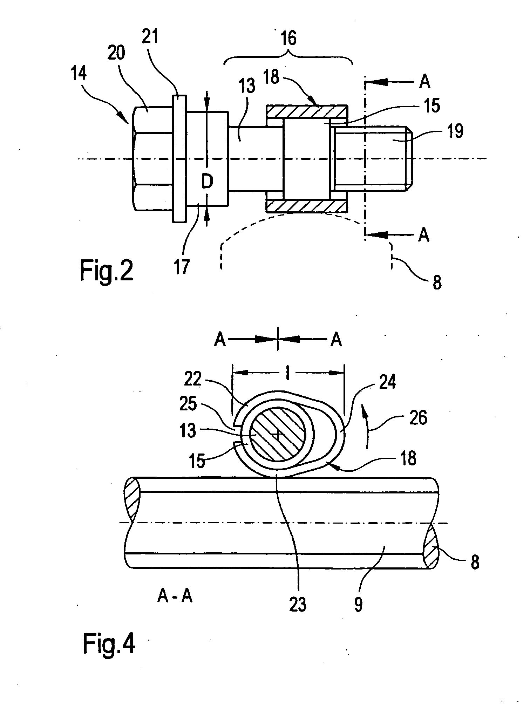

Im linken Klemmschraubenohr 6 ist dabei eine linke Aufnahmeöffnung 11 mit einem Innengewinde vorgesehen. Dazu entsprechend ist im rechten Klemmschraubenohr 7 eine rechte Aufnahmeöffnung 12 vorgesehen, die auf ihrer Innenseite zylindrisch glatt ausgebildet ist. Die linke Aufnahmeöffnung 11 und die rechte Aufnahmeöffnung 12 fluchten miteinander, so dass eine Spannschraube 14 einsetzbar ist, die in Figur 2 in näherem Detail gezeigt ist.

Zwischen dem linken Klemmschraubenohr 6 und dem rechten Klemmschraubenohr 7 ist eine Ritzelwelle 8 aufgenommen, die beiderseits mit Abflachungen 9 versehen ist. In Figur 1 ist nur eine der beiden Abflachungen 9 zu sehen. Dabei ist der Abstand der beiden Abflachungen 9 zueinander so gewählt, dass die Ritzelwelle 8 leicht in den Bereich zwischen das linke Klemmschraubenohr 6 und das rechte Klemmschraubenohr 7 eingeführt werden kann.

Ein in Figur 1 nur mit Strichlinie dargestelltes Sicherungsblech 10 hält nach dem Einführen der Ritzelwelle 8 in das Klemmstück 1 diese an der in Figur 1 gezeigten Stelle fest, an der die Symmetrielinie der Ritzelwelle 8 mit der Symmetrielinie der Zwischenwellenbolzenöffnungen 5 fluchtet.

Die Spannschraube 14, die in Figur 2 im Querschnitt zu sehen ist, gliedert sich in einen als Betätigungsabschnitt vorgesehenen Schraubenkopf 20, in einen sich daran anschließenden Scheibenabsatz 21 und in einen sich an den Scheibenabsatz 21 anschließenden rechten Lagerabschnitt 17, der zur Aufnahme in der rechten Aufnahmeöffnung 12 in der rechten Seitenwange 3 bestimmt ist. Der Durchmesser des rechten Lagerabschnitts 17 ist dabei so gewählt, dass sich in der rechten Aufnahmeöffnung 12 eine Spielpassung ergibt, die ein Verdrehen der Spannschraube 14 gestattet, wenn diese in das rechte Klemmschraubenohr 7 eingesetzt ist.

Bei der Spannschraube 14 schließt sich an den rechten Lagerabschnitt 17 ein Andrückabschnitt 16 an, der sich in einen Tragbolzen 13 und einen sich vom Tragbolzen 13 erhebenden Ringabsatz 15 gliedert. Auf dem Ringabsatz 15 ist ein Zangenfederelement 18 angeordnet. Das Zangenfederelement 18 bzw. dessen äußere Form ist in Figur 4 besonders gut zu sehen.

Schließlich schließt sich an den Ringabsatz 15 ein Außengewindeabschnitt 19 an, der zur Aufnahme in der linken Aufnahmeöffnung 11 bestimmt ist.

In einer hier nicht gezeigten, verbesserten Spannschraube erstreckt sich der Ringabsatz 15 bis hin zum rechten Lagerabschnitt 17. Auf der anderen Seite des Ringansatzes 15 ist statt eines Absatzes eine Fase als schräger Übergang zwischen Ringabsatz 15 und Außengewindeabschnitt 19 vorgesehen. Dieser erleichtert das Aufschieben des Zangenfederelements 18 auf den Ringabsatz.

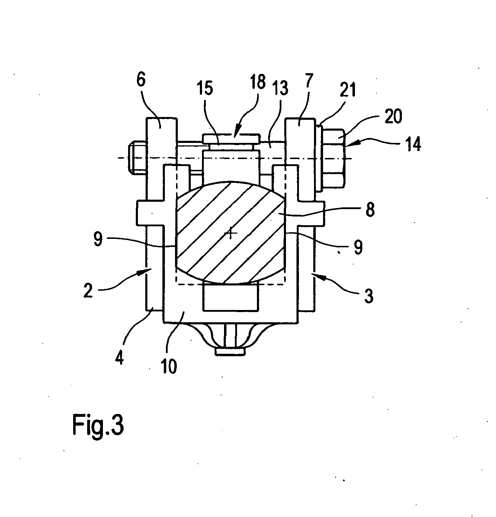

Figur 3 zeigt das Klemmstück 1 aus Figur 1 mit einer darin eingesetzten Spannschraube 14 gemäß Figur 2. Wie man in dieser Ansicht besonders gut sieht, liegt das Zangenfederelement 18 an der Ritzelwelle 8 an. Das linke Klemmschraubenohr 6 und das rechte Klemmschraubenohr 7 sind aufgrund der Wirkung der Spannschraube 14 zueinander gezogen und klemmen die dazwischen angeordnete Ritzelwelle 8 fest. Das Sicherungsblech 10, das während des Klemmvorgangs die Ritzelwelle 8 an ihrem Platz zwischen der linken Seitenwange 2 und der rechten Seitenwange 3 gehalten hat, könnte nun entnommen werden, denn es hat bei angezogenem Zustand der Spannschraube 14 keine Funktion mehr.

Figur 4 veranschaulicht Funktionsabschnitte der Spannschraube 14 aus Figur 2 und Figur 3 im Zusammenwirken mit der Ritzelwelle 8 in näherem Detail. In der Darstellung von Figur 4 sind dabei diejenigen Teile weggelassen, die zum besseren Verständnis nicht unbedingt notwendig sind. Wie man in Figur 4 besonders deutlich sieht, gliedert sich das Zangenfederelement in einen ersten Klemmbereich 22 und in einen zweiten Klemmbereich 23, die unmittelbar am Ringabsatz 15 anliegen. Ein Nockenbereich 24 liegt nicht am Ringabsatz 15 an, sondern erhebt sich über dem Ringabsatz 15. Deutlich sieht man in Figur 4 einen Federspalt 25, der sich als unterbrochener Bereich des Zangenfederelements 18 ergibt, nämlich zwischen dem ersten Klemmbereich 22 und dem zweiten Klemmbereich 23. Ein Bewegungspfeil 26 deutet an, in welcher Richtung sich der Nockenbereich 24 verschiebt, wenn die Spannschraube 14 - ein Rechtsgewinde am Außengewindeabschnitt 19 vorausgesetzt - festgezogen wird. Man sieht in dieser Ansicht deutlich, dass sich der Nockenbereich 24 auf die Ritzelwelle 8 zu bewegt und diese nach unten drückt, wenn die Spannschraube 14 angezogen wird.

Weiterhin ist zu bemerken, dass die größte Ausdehnung 1 des Zangenfederelements 18 kleiner ist als der Durchmesser D der rechten Aufnahmeöffnung 12.

Zum Zusammensetzen des Klemmstücks 1 gemäß Figur 3 wird wie folgt vorgegangen. Zunächst wird die Zwischenwelle bzw. die Lenksäule mit dem daran angehängten Klemmstück 1 bereitgestellt, wenn ein Kraftfahrzeug gefertigt wird. Das Klemmstück 1 ist dabei um die Zwischenwellenbolzenöffnung 5 herum von der Zwischenwelle weggeschwenkt. Nachfolgend wird das Lenkgetriebe an den Kraftfahrzeugen montiert, wobei die Ritzelwelle 8 im Bereich der Zwischenwelle zum Liegen kommt. Beim Einbau des Lenkgetriebes stört das Klemmstück 1 nicht, denn dieses ist von der Flucht zwischen Zwischenwelle und Ritzelwelle 8 weggeschwenkt.

In einem nachfolgenden Schritt wird das Klemmstück 1 auf die Ritzelwelle 8 aufgeschwenkt, wie es in Figur 1 dargestellt ist. In dieser Stellung sichert das Sicherungsblech 10 die Ritzenwelle 8, so dass diese zwischen dem linken Klemmschraubenohr 6 und dem rechten Klemmschraubenohr 7 gehalten wird, wie sie in Figur 1 gezeigt ist.

Danach wird die Spannschraube 14 gemäß Figur 2 zunächst in die rechte Aufnahmeöffnung 12 eingefügt. Dabei lässt sich das Zangenfederelement 18 leicht durch die rechte Aufnahmeöffnung 12 hindurch schieben, bis der rechte Lagerabschnitt 17 in der rechten Aufnahmeöffnung 12 aufgenommen wird. In diesem Zustand greift der Außengewindeabschnitt 19 in die linke Aufnahmeöffnung ein, die Spannschraube 14 kann nun durch Drehen in das linke Klemmschraubenohr 6 eingeschraubt werden. Beim Drehen dreht sich der Nockenbereich 24 des Zangenfederelements 18 mit, bis er auf der Oberfläche der Ritzelwelle 8 aufsteht. Danach kann die Spannschraube 14 nur weitergedreht werden, wenn gleichzeitig das Zangenfederelement 18 entgegen einer Reibungskraft auf dem Ringabsatz 15 verrutscht. Die dazu notwendige Gegenkraft wird von der Ritzelwelle 8 bereitgestellt, die wiederum dadurch in dem Bereich zwischen das linke Klemmschraubenohr 6 und das rechte Klemmschraubenohr 7 gedrückt wird, so dass sie auf der Bodenplatte 4 aufsteht. Sobald die durch die Spannschraube 14 erzeugte Klemmkraft zwischen linkem Klemmschraubenohr 6 und rechtem Klemmschraubenohr 7 so groß ist, dass die Ritzelwelle 8 geklemmt wird, herrscht eine sichere Verbindung zwischen dem Klemmstück 1 und der Ritzelwelle 8.

Es versteht sich von selbst, dass die Zwischenwelle vor dem Beginn des Schraubvorgangs etwas gedreht werden kann, damit die Spannschraube 14 in das Klemmstück 1 eingesetzt werden kann. Dabei ist ab dem Zusammenfügen von Klemmstück 1 und Ritzelwelle 8 nur eine ganz kleine Drehbewegung notwendig, und es ergibt sich der weitere Vorteil, dass nach dem Einsetzen der Spannschraube 14 das Klemmstück 1 nicht mehr gedreht werden braucht, um eine Klemmung herbeizuführen.

Es versteht sich ebenfalls von selbst, dass auch eine kinematische Umkehr in der Weise mit der Erfindung erzielt werden kann, dass in einem ersten Montageschritt das Klemmstück 1 bereits an der Ritzelwelle 8 befestigt ist, während es in einem nachfolgenden Montageschritt erst mit der in Figur 1 nicht gezeigten Zwischenwelle verbunden wird. Prinzipiell wird dabei wie oben stehend erläutert vorgegangen.

### Bezugszeichenliste

- 1: Klemmstück
- 2: Linke Seitenwange
- 3: Rechte Seitenwange
- 4: Bodenplatte
- 5: Zwischenwellenbolzenöffnung
- 6: Linkes Klemmschraubenohr
- 7: Rechtes Klemmschraubenohr
- 8: Ritzelwelle
- 9: Abflachung
- 10: Sicherungsblech
- 11: Linke Aufnahmeöffnung
- 12: Rechte Aufnahmeöffnung
- 13: Tragbolzen
- 14: Spannschraube
- 15: Ringabsatz
- 16: Andrückabschnitt
- 17: Rechter Lagerabschnitt
- 18: Zangenfederelement
- 19: Außengewindeabschnitt
- 20: Schraubenkopf
- 21: Scheibenabsatz
- 22: Erster Klemmbereich
- 23: Zweiter Klemmbereich
- 24: Nockenbereich
- 25: Federspalt
- 26: Bewegungspfeil

## Patentansprüche

1. Klemmstück (1) zur Verbindung einer Zwischenwelle mit einer Ritzelwelle (8) eines Lenkgetriebes eines Kraftfahrzeugs, wobei das Klemmstück (1) zwei Seitenwangen (2, 3) aufweist, die so ausgebildet sind, dass dazwischen die Ritzelwelle (8) unter Klemmung mit einer Spannschraube (14) aufnehmbar ist, die an einem Ende ein Betätigungselement (20) für ein Betätigungswerkzeug und an dem Betätigungselement (20) gegenüberliegenden Ende einen Gewindeabschnitt (19) aufweist, wobei die Spannschraube (14) ein Andrückelement (18) mit einem vorstehenden Andrückabschnitt (24) aufweist, wobei das Andrückelement (18) gegen Reibungskraft bewegbar auf der Spannschraube (14) gelagert ist **dadurch gekennzeichnet, daß** das Andrückelement als Zangenfederelement (18) ausgebildet ist, das auf einem Ringabsatz (15) der Spannschraube (14) zwischen einem Schraubenkopf (20) und einem Gewindeabschnitt (19) der Spannschraube (14) gelagert ist.

2. Klemmstück nach Anspruch 1, wobei das Andrückelement (18) verdrehbar auf der Spannschraube (14) gelagert ist.

3. Klemmstück nach Anspruch 1 oder 2, wobei das Zangenfederelement (18) an seinem Umfang einen Federschlitz (25) aufweist.

4. Lenkgetriebe eines Kraftfahrzeugs mit einem Klemmstück (1) nach einem der vorhergehenden Patentansprüche zur Verbindung einer Zwischenwelle mit einer Ritzelwelle (8) des Lenkgetriebes.

5. Kraftfahrzeug mit einem Lenkgetriebe nach Patentanspruch 4.

6. Verfahren zur Montage einer Lenkung eines Kraftfahrzeugs, das die folgenden Schritte aufweist:
- Vorsehen eines Kraftfahrzeugs mit einer Zwischenwelle und mit einem Lenkgetriebe mit einer Ritzelwelle (8), wobei die Zwischenwelle oder die Ritzelwelle (8) mit einem Ende eines Klemmstücks (1) nach einem der Patentansprüche 1 bis 3 verbunden ist,
- Umklappen des Klemmstücks (1), so dass Zwischenwelle und die Ritzelwelle (8) über das Klemmstück (1) miteinander verbunden sind,
- Drehen der Zwischenwelle, bis die Spannschraube (14) in die Aufnahmeöffnungen (11, 12) der Seitenwangen (2, 3) einsetzbar ist,
- Festziehen der Spannschraube (14), wobei die Spannschraube (14) so gedreht wird, dass das Andrückelement (18) an der Zwischenwelle bzw. an der Ritzelwelle (8) anliegt.

7. Verfahren zur Montage einer Lenkung eines Kraftfahrzeugs nach Patentanspruch 6, wobei das Andrückelement (18) beim Festziehen der Spannschraube (14) so gedreht wird, dass der Andrückabschnitt die Zwischenwelle bzw. die Ritzelwelle (8) in den Bereich zwischen die Seitenwangen (2, 3) hineindrückt.

## Claims

1. A clamping element (1) for connecting an intermediate shaft to a pinion shaft (8) of a steering gear of a motor vehicle, wherein the clamping element (1) comprises two side cheeks (2, 3) which are arranged in such a way that the pinion shaft (8) can be accommodated in between under clamping with a clamping screw (14) which comprises an actuating element (20) for an actuating tool at the one end and a threaded section (19) at the end opposite of the actuating element (20), wherein the clamping screw (14) comprises a pressing element (18) with a protruding pressing section (24), wherein the pressing element (18) is movably held on the clamping screw (14) against a frictional force, **characterized in that** the pressing element is arranged as a pincer spring element (18) which is held on an annular shoulder (15) of the clamping screw (14) between a screw head (20) and a threaded section (19) of the clamping screw (14).

2. A clamping element according to claim 1, wherein the pressing element (18) is twistably held on the clamping screw (14).

3. A clamping element according to claim 1 or 2, wherein the pincer spring element (18) comprises a spring slot (25) on its circumference.

4. A steering gear of a motor vehicle, comprising a clamping element (1) according to one of the preceding claims for connecting an intermediate shaft to a pinion shaft (8) of the steering gear.

5. A motor vehicle with a steering gear according to claim 4.

6. A method for mounting a steering assembly of a motor vehicle, comprising the following steps:
- providing a motor vehicle with an intermediate shaft and with a steering gear with a pinion shaft (8), wherein the intermediate shaft or the pinion shaft (8) are connected to one end of a clamping element (1) according to one of the claims 1 to 3;
- folding the clamping element (1), so that the intermediate shaft and the pinion shaft (8) are connected to each other by way of the clamping element (1);
- rotating the intermediate shaft until the clamping screw (14) is insertable into the receiving openings (11, 12) of the side cheeks (2, 3);
- tightening of the clamping screw (14), wherein the clamping screw (14) is twisted in such a way that the pressing element (18) rests on the intermediate shaft or the pinion shaft (8).

7. A method for mounting a steering assembly of a motor vehicle according to claim 6, wherein the pressing element (18) is twisted in such a way during tightening of the clamping screw (14) that the pressing section presses the intermediate shaft or pinion shaft (8) into the region between the side cheeks (2, 3).

## Revendications

1. Pièce de serrage (1) pour relier un arbre intermédiaire à un arbre de pignon (8) d'une transmission de direction d'un véhicule à moteur, laquelle pièce de serrage (1) présente deux flasques latéraux (2, 3) conçus de telle façon que l'arbre de pignon (8) puisse être reçu entre eux et serré avec une vis de serrage (14) qui présente à une extrémité un élément d'actionnement (20) pour un outil d'actionnement et à l'extrémité opposée à l'élément d'actionnement (20) une section filetée (19), la vis de serrage (14) présentant un élément presseur (18) ayant une partie d'appui (24) en relief, l'élément presseur (18) étant supporté sur la vis de serrage (14) de façon à pouvoir se déplacer contre une force de friction, **caractérisée en ce que** l'élément presseur est conformé comme un élément à ressort à pince (18) qui est supporté sur un épaulement annulaire (15) de la vis de serrage (14) entre une tête de vis (20) et une section filetée (19) de la vis de serrage (14).

2. Pièce de serrage selon la revendication 1, dans laquelle l'élément presseur (18) est supporté avec possibilité de rotation sur la vis de serrage (14).

3. Pièce de serrage selon la revendication 1 ou 2, dans laquelle l'élément de ressort à pince (18) présente une fente de ressort (25) sur sa circonférence.

4. Transmission de direction d'un véhicule à moteur avec une pièce de serrage (1) selon l'une des revendications précédentes pour relier un arbre intermédiaire à un arbre de pignon (8) de la transmission de direction.

5. Véhicule à moteur avec une transmission de direction selon la revendication 4.

6. Procédé pour le montage d'une direction d'un véhicule à moteur, présentant les étapes suivantes:
- prévision d'un véhicule à moteur avec un arbre intermédiaire et avec une transmission de direction avec un arbre de pignon (8), l'arbre intermédiaire ou l'arbre de pignon (8) étant relié à une extrémité d'une pièce de serrage (1) selon l'une des revendications 1 à 3;
- rabattement de la pièce de serrage (1) de façon à relier ensemble l'arbre intermédiaire et l'arbre de pignon (8) à l'aide de la pièce de serrage (1);
- rotation de l'arbre intermédiaire jusqu'à ce que la vis de serrage (14) puisse être introduite dans les ouvertures de logement (11, 12) des flasques latéraux (2, 3) ;
- serrage de la vis de serrage (14), laquelle vis de serrage (14) est tournée jusqu'à ce que l'élément presseur (18) repose sur l'arbre intermédiaire ou sur l'arbre de pignon (8).

7. Procédé pour le montage d'une direction d'un véhicule à moteur selon la revendication 6, dans lequel l'élément presseur (18) est tourné pour serrer la vis de serrage (14) jusqu'à ce que la section d'appui pousse l'arbre intermédiaire ou l'arbre de pignon (8) dans la zone située entre les flasques latéraux (2, 3).
